# EUROPÄISCHE PATENTANMELDUNG

(11) **EP 2 381 279 A1**
(43) Veröffentlichungstag der Anmeldung: **26.10.2011**
(21) Anmeldenummer: 11156887.9
(22) Anmeldetag: 03.03.2011
(51) Int. Cl.: G02B 5/18, G02B 27/22, G02B 27/44, G02B 27/09, H04N 13/00, G03H 1/22

(54) **Set zum Betrachten von dreidimensionalen Punktwolken**

(30) Priorität: 20.04.2010 DE 102010018068
(71) Anmelder: Violonchi, Ralf, 47906 Kempen (DE)
(72) Erfinder: Violonchi, Ralf, 47906 Kempen (DE)
(74) Vertreter: Neumann, Günter

(57) **Zusammenfassung**

Die Erfindung betrifft ein Set zum Betrachten von dreidimensionalen Punktwolken (1), aufweisend: mindestens eine monochromatische Lichtquelle (2), mindestens ein Mittel (3) zur Projektion von punktförmigen Objekten, mindestens eine Betrachtungsbrille (4) mit mindestens je einem zweidimensionalen Diffraktionsgitter (5, 6) pro Augenglas Erfindungsgemäß wird vorgeschlagen, die Punktwolke (1) durch die Brille (4) zu Betrachten, Hierdurch wird beim Betrachter ein ungewöhnlich tiefer und ausgeprägter 3D-Effekt erzeugt.

## Beschreibung

Die Erfindung betrifft ein Set zum Betrachten von dreidimensionalen Punktwolken, die Verwendung eines Diffraktionsgitters als Augenglas für eine Brille sowie ein Verfahren zur Erzeugung von virtuellen und dreidimensionalen Punktwolken.

Zur Unterhaltung, zum räumlichen Koordinationstraining sowie für Unterrichtszwecke sind Projektoren bekannt, die mit einer von einem Betrachter aufgezogenen Brille dem Betrachter räumliche Bilder vortäuschen, indem beide Augen des Betrachters über unterschiedliche Technologien mit geringfügig unterschiedlichen Bildern versorgt werden.

Eine erste Methode ist die Verwendung von Polarisationsfiltern in Verbindung mit zwei Projektoren. Ein erster Projektor projiziert auf eine Leinwand ein erstes Bild für ein erstes Auge des Betrachters. Dieses Bild wird durch ein erstes Polfilter durch polarisierte Lichtstrahlen erzeugt. Ein zweiter Projektor projiziert auf dieselbe Leinwand ein zweites Bild für ein zweites Auge des Betrachters, wobei die Polarisationsebene der Lichtstrahlen des zweiten Projektors senkrecht auf der Polarisationsebene der Lichtstrahlen des ersten Projektors steht. Eine vom Betrachter zu tragende Brille weist Polarisationsfilter für das jeweils korrespondierende Auge auf, so dass das erste Auge nur das erste Bild empfängt, das zweite Auge nur das zweite Bild empfängt. Durch unterschiedliche Bilder, die von der selben Szene aus geringfügig unterschiedlichen Perspektiven aufgenommen wurden, erscheint dem Betrachter ein virtueller dreidimensionaler Effekt. Die vom Betrachter empfundenen Bilder wirken plastisch und anfassbar.

Eine andere Technik nutzt zur Diskriminierung des ersten Bild für das zweite Auge und umgekehrt, für die Diskriminierung des zweiten Bildes für das erste Auge als Filter einen Rot/Grün-Filter, Das erste Auge empfängt mit einem Grünfilter nur die nicht-grünanteiligen Bilder aus erster Perspektive der abgebildeten Szene, hingegen empfängt das zweite Auge mit einem Rotfilter nur die nicht-rotanteiligen Bilder, die aus der zweiten Perspektive aufgenommen sind.

Um für einen Betrachter zu eingangs genannten Zwecken dreidimensionale Bilder zu erzeugen, sind neben den passiven Filtertechnologien noch weitere Technologien bekannt. Hierzu wird auf eine Shutter-Brille verwiesen, deren Augenglass-Transmission in Sekunderibruchteilen elektrisch eingestellt werden kann. Ein Fernsehbild zeigt so dann in abwechselnder Reihenfolge zunächst das erste Bild und die mit dem Fernseher synchronisierte Brille öffnet nur das Augenglass (erhöht die Transmission, verringert die Extinktion), dessen korrespondierende Auge das augenblickliche Bild empfangen soll. Etwa eine 50stel Sekunde später wird dem jeweils anderen Auge ein anderes Bild derselben Szene präsentiert. In der Gesamtschau und durch die Trägheit des menschlichen Sehapparates entsteht so ein räumlicher Effekt.

Diese stereobildgebenden Verfahren haben aber alle den Nachteil einer starren optischen Achse. Unter optischer Achse wird hier die Ausrichtung des Betrachterhorizonts des Betrachters verstanden. Dreht der Betrachter den Kopf auch nur geringfügig, so dass die Augen nicht beide auf einer horizontalen Achse liegen, so verschwindet die dreidimensionale Empfindung, weil die Filtertechnologie nicht mehr dazu in der Lage ist, die Bilder beider Augen zu trennen. Des Weiteren ist die Rauminformation nur in der Links-Rechtsverschiebung der verschieden weit vom Benutzer entfernten Objekte enthalten. Eine wirkliche räumliche Information kann der Betrachter der so präsentierten Szene aber nicht entnehmen, wenn dieser seine Augenachse gegenüber dem Horizont verdreht.

Zur Betrachtung von Sternen in einem Planetarium sind Sternprojektoren in vielen unterschiedlichen Technologien bekannt. Weit verbreitet ist eine Technologie, die zur exakten Reproduktion des nächtlichen Sternenhimmels eine Vielzahl von Punktprojektoren aufeinander abstimmen. Die Farbe der so abgebildeten Sterne ist nahezu zweitrangig, aber in der Regel nachtblau oder weiß.

Zu Unterhaltungszwecken und zu Lehrzwecken im Klassenverband oder für den Einsatz daheime sind Taschenprojektoren bekannt, die mit Hilfe von Das Sternenbilder an die Wand projizieren können.

In der WO008089729 A1 wird eine Strahlformungsanordnung zur Bildprojektion einer divergenten isotropen Lichtpunktewolke gelehrt. Diese nutzt als Lichtquelle einen Laser und teilt das Licht durch eine holografisch-diffraktive Optik in eine Vielzahl von Punkten. Um konkrete Sternenbilder abzubilden, wird die Optik einer ersten holografisch-diffraktiven Optik durch eine Gruppe weiterer diffraktiver Optiken geleitet. Das Bild der ersten diffraktiven Optik mit konkreten Sternenbildern bleibt bei der Passage der weiteren diffraktiven Optiken als sogenannte "nullte Ordung" erhalten und eine Vielzahl von weiteren, durch die weiteren diffraktiven Optiken erzeugten Lichtpunkte umsäumen das eingestellte Sternenbild der ersten diffraktiven Optik.

Das so hergestellte Bild, eine isotrope Punkteschar, weist aber keine räumlichen Informationen auf. Auf eine Projektionsfläche projiziert, ergibt sich eine nüchterne Punkteschar. Sofern diese Punkteschar aber auf ein räumliches Objekt gerichtet wird, erscheinen die Punkte, die von kollimierten Lichtstrahlen erzeugt werden, im Raum verteilt zu sein, nämlich auf der Oberfläche des räumlichen Körpers liegend. Besonders eindrucksvoll ist dieser Effekt bei der Projektion auf Laub- oder Nadelbäume, die zu einer tatsächlichen dreidimensionalen Verteilung der Punkte im Raum führt. Alternativ ist es auch möglich, sehr dünne Textilien oder Gewebe im Raum zu spannen, um so einen räumlichen Eindruck der Punkteschar zu erhalten. Derartige Effekte werden auf Bühnen oder in Filmszenen zur Simulation von Nachthimmeln mit Sternen verwendet.

Unabhängig von einer räumlichen Projektionsfläche ist es aber bisher nicht möglich, mit dieser zuletzt beschriebenen Technologie einen räumlichen Eindruck zu erhalten.

Aufgabe der Erfindung ist es deshalb, ein Verfahren zu entwickeln, mit dessen Hilfe einem Betrachter Lichtpunkte im Raum verteilt präsentiert werden können. Neben der Entwicklung des Verfahrens ist es auch Gegenstand der Erfindung ein Set zur Erzeugung von im Raum verteilten Lichtpunkten zur Verfügung zu stellen,

Die der Erfindung zu Grunde liegende Aufgabe wird gelöst durch ein Set mit den Merkmalen des Anspruches 1. Weitere vorteilhafte Ausgestaltungen sind in den Unteransprüchen angegeben.

Die der Erfindung zu Grunde liegende Verfahrensaufgabe wird gelöst durch die Verfahren gemäß Anspruch 6 bis 8.

Erfindungsgemäß wird vorgeschlagen, mindestens eine monochromatische Lichtquelle, mindestens ein Mittel zur Abbildung von punktförmigen Objekten und mindestens eine Betrachtungsbrille mit mindestens je einem zweidimensionalen Diffraktionsgitter pro Augenglas als Set zur Verfügung zu stellen, Betrachtet man eine reale Szene bei herkömmlicher Beleuchtung durch ein Diffraktionsgitter, ergibt sich ein Prismeneffekt, der dazu führt, dass alle stark leuchtenden Objekte spektral aufgelöst werden und so, je nach Diffraktionstyp, einen Regenbogenschweif oder eine regenbogengefärbte Korona aufweisen. Ein derartiges Bild von einer realen Szene lädt zur Heiterkeit ein, aber stellt in keiner Weise eine veränderte Szene dar.

Das Besondere gemäß der Erfindung ist, ein Diffraktionsgitter als Brillenglas in Verbindung mit einer monochromatischen Lichtquelle zu nutzen, wobei unter monochromatisch eine Wellenlängenverteilung gemeint ist, die ein Halbleiterlaser oder ein durchschnittlicher Laser für kommerzielle Zwecke aufweist. Diese zuvor genannten Laser haben eine derart enge Wellenlängenverteilung, die durch das menschliche Auge nicht aufgelöst werden kann und auch durch solche Gitter, die im Bereich von 500 Linien/cm bis über 10.000 Linien/mm räumlich-spektral so gering aufgelöst werden, dass diese Auflösung für das menschliche Auge nicht erkennbar ist.

Die monochromatische Lichtquelle als flächige Punkte aufgelöst, auf eine beliebige Oberfläche projiziert und durch eine Diffraktionsoptik betrachtet, vermittelt dem Betrachter den Eindruck einer dreidimensional verteilten Lichtpunktwolke, Dabei teilt die Diffraktionsoptik die Lichteindrücke durch Lichtbrechung am Spalt in unterschiedliche Lichtstrahlen auf, die unter einem unterschiedlichen Winkel auf das Auge treffen. Je nach Position des einen oder anderen Auges relativ zum Lichtpunkt verändert sich so die scheinbare Position des Lichtpunktes. Die unterschiedliche Position des Lichtpunktes in beiden Augen wird vom Gehirn als im Raum liegend wahr genommen.

Es ist möglich, mit einer großen Bandbreite unterschiedlicher Diffraktionsgitter zu arbeiten. Ist die Dichte der Linien pro Längeneinheit jedoch zu gering, so führt der unterschiedliche Winkel durch die geringe Winkelveränderung bei der Brechung der Lichtstrahlen nur zu einem Bild mit geringer Tiefe. Bei zu hoher Dichte, wird der Tiefeneffekt immer ausgeprägter, jedoch auf Kosten der Helligkeit eines jeden Punktes, der bei Diffraktionsgittern mit höherer Auflösung zu einer Aufteilung eines jeden Strahls in eine Vielzahl von Strahlen mit korrespondierend geringerer Intensität führt. Am besten eignen sich Diffraktionsgitter mit einer Linienzahl von 500 Linien/cm bis etwa 10.000 Linien/cm. Um den räumlichen Effekt zu verstärken, und um eine Unabhängigkeit von der Augenachse zu erhalten, hat es sich als vorteilhaft erwiesen, ein zweidimensionales Diffraktionsgitter zu verwenden, welches Abbildungen der ersten und höherer Ordnung in zwei Dimensionen erzeugt. Darüber hinaus wird der erwünschte Effekt bei der Verwendung von mehr als zwei Achsen noch weiter verstärkt, beispielsweise bei der Verwendung von Beugungsgittern mit drei Achsen, die jeweils um 60° gegeneinander verdreht sind.

Besonders bei der Verwendung von Mitteln zur Abbildung von punktförmigen Objekten mit einer zufälligen, bei großen Punktzahlen auch isotropen Verteilung der Punkte im Raum kommt ein zweidimensionales Gitter zur Wirkung. Durch die zufällige Verteilung ist keine Richtungscharaketristik der Brille für den Betrachter erkennbar, weil die Achsen des zweidimensionalen Gitters nicht erkennbar sind. Durch die zufällige oder auch isotrope Verteilung der Punkte ist eine Orientierung an sich scheinbar ergebenden Linien im erfahrenen Bild des Betrachters nicht möglich.

Bei der Verwendung von Gittern mit 5.000 Linien/cm und mehr überlagern sich Bildwolkenprojektionen unterschiedlicher Ordnung. Die sogenannte Projektion 0. (nullter) Ordnung bleibt im Raum unabhängig von der Position des Betrachters bestehen, die Projektion erster Ordnung läuft bei Rotation des Blickes um den Mittelpunkt der Projektion der nullten Ordnung herum. Diese werden getroffen von Projektionen der höheren Ordnung.

Ein gleichmäßiger Gang der sich bewegenden Punkte ist nicht erkennbar. Bei Rotation des Blickes scheinen dem Betrachter die Lichtpunkte im Raum zu wandern, wobei selbst ein Projektionsschatten durch den Betrachter in der Punktewolke durch Projektionen höherer Ordnung in der Brille ausgeglichen werden.

Als Effekt erlebt der Betrachter eine Punktewolke, die um den Betrachter selbst angeordnet ist und innerhalb welcher der Betrachter mit großen Raumwinkeln des Blickes umherwandern kann, ohne dass der räumliche Effekt verschwindet.

In besonderer Ausgestaltung der Erfindung ist vorgesehen, dass die mindestens eine monochromatische Lichtquelle ein Halbleiterlaser ist, wobei jede monochromatische Lichtquelle eine individuelle Wellenlänge aufweist. In einfacher Ausgestaltung der Erfindung ist vorgesehen, zwei Laser unterschiedlicher Wellenlänge in dem mindestens einen Mittel zur Abbildung von punktförmigen Objekten vorhanden ist. Bei Verwendung von Lichtquellen mit Linienspektren sind auch mehrere unterschiedliche und individuelle Wellenlängen vorhanden. Die Verwendung von Lichtquellen mit unterschiedlichen Wellenlängen hat den Vorteil, dass sich die unterschiedlich eingefärbten Punkte mit unterschiedlichen Geschwindigkeiten beim Rotieren des Blickes durch den Raum zu bewegen scheinen. Besonders bei Wellenlängen, die einerseits nahe beieinander liegen, aber dennoch klar durch das Diffraktionsgitter räumlich aufgelöst werden, intensiviert sich der Effekt der sich im Raum unabhängig voneinander bewegenden Lichtpunkte. Die Wellenlängen können so gewählt sein, dass ein grüner Lichtpunkt neben einem türkisen Lichtpunkt, beide haben Wellenlängen im Bereich von 500 bis 580 nm, für einen Betrachter nicht gut farblich unterscheidbar sind und gleichzeitig den Effekt erzeugen, mit unterschiedlichen Geschwindigkeiten durch den Raum zu gleiten.

In Ausgestaltung der Erfindung ist vorgesehen, dass das mindestens eine Mittel zur Abbildung von punktförmigen Objekten ausgewählt ist aus der Gruppe bestehend aus:
a) eine Kombination aus einer Aufweitungslinse und einer Punktblende, wobei die Punktblende mindestens ein Loch, bevorzugt viele Löcher aufweist.
b) eine diffraktive Optik, wobei die diffraktive Optik optional aus einer Kombination von mindestens zwei diffraktiven Elementen besteht, die voreinander angeordnet sind,
c) eine diffraktive Optik mit zwei übereinander projizierten Diffraktionsmustern,
d) eine holografisch-diffraktive Optik, wobei die holografisch-diffraktive Optik wahlweise kombiniert ist mit mindestens einer regelmäßigen diffraktiven Optik und/oder mindestens einer weiteren holografischen diffraktiven Optik,
e) ein mehrschichtiges diffraktiv optisches Element (DOE), wobei das DOE innerhalb eines transparenten Materialblockes mehre Ebenen mit diffraktiven oder holografisch-diffraktiven Mustern aufweist.

Der einfachste Fall einer Projektionseinheit als Mittel zur Abbildung von punktförmigen Objekten ist eine Aufweitungslinse und eine Blende mit vorzugsweise einer hohen Anzahl von Kleinstlöchern, Das monochromatische Licht entweicht durch die Kleinstlöcher und projiziert die Kleinstlöcher als Punkte auf eine Projektionsfläche. Diese einfache Projektionseinheit ist jedoch eher lichtschwach.

Eine diffraktive Optik ist zwar teurer in der Herstellung, jedoch erlaubt die diffraktive Optik in Form von Folien oder Gläsern mit einer bestimmten Anzahl von Linien pro Längeneinheit oder von Feldern pro Flächenmaß, dass die gesamte zur Verfügung stehende Lichtleistung für die Punktprojektion verwendet wird, wobei eine einfache und symmetrische diffraktive Optik stets einen starken Lichtpunkt nullter Ordnung erzeugt, der das Bild durch seine Helligkeit dominiert. Durch eine Kombination von Diffraktiven Optiken, die voreinander platziert werden, potenziert sich die Anzahl einzelner Lichtpunkte, so dass mit einer geringen Anzahl kombinierter diffraktiver Optiken eine sehr hohe Punktzahl in der Projektion erhalten werden kann.

Eine besondere Ausgestaltung ist eine diffraktive Optik, in der zwei Linienmuster übereinander projiziert sind. Dies ist vergleichbar mit einer Linienanordnung mit unterschiedlichen Frequenzen. Das so erzeugte Punktmuster eignet sich zur Erstellung von pseudo-zufällig verteilten Lichtpunkten in der Projektion.

In bevorzugter Ausgestaltung der Erfindung besteht die diffraktive Optik aus einer holografisch-diffraktiven Optik, wobei die holografisch-diffraktive Optik wahlweise kombiniert ist mit mindestens einer regelmäßigen diffraktiven Optik und/oder mindestens einer weiteren holografischen diffraktiven Optik. Die holografisch-diffraktive Optik ist in diesem Fall eine rechnerisch erstellte Folie mit einem Hologramm, die bei durchleuchten mit einer kohärenten Lichtquelle zu einem gewünschten Punktmuster führt. Dieses könnte beispielsweise die Punkteverteilung sein, die an ein bekanntes Sternbild erinnert. Diese Strahlen der ersten holografisch-diffraktiven Optik dienen als Ausgangsstrahlen für weitere regelmäßigen Gitter, mit dessen Hilfe die Sternenbilder pseudo-zufällig im Raum vervielfacht und verteilt werden. Auch ist es möglich, identische oder verschiedene holografisch-diffraktive Optiken übereinander, verdreht oder gleichsinnig anzuordnen, um eine hohe Anzahl pseudozufällig verteilter Lichtpunkte zu erhalten.

Um den Effekt der scheinbar zufälligen Bewegung der Lichtpunkte im Raum zu verstärken, ist vorgesehen, die Achse der diffraktiven Optiken in den Brillengläsern gegeneinander zu verdrehen.

Die Erfindung wird anhand der folgenden Figuren näher erläutert.

Es zeigt:
- Figur 1: ein erfindungsgemäßes Set im Betrieb
- Figur 2: das virtuelle Abbild eines monochromatischen Punktes in einer diffraktiven Optik für ein Augenglasglas aus dem Set,
- Figur 3: die Überlagerung von Punktescharen verschiedener Ordnung.

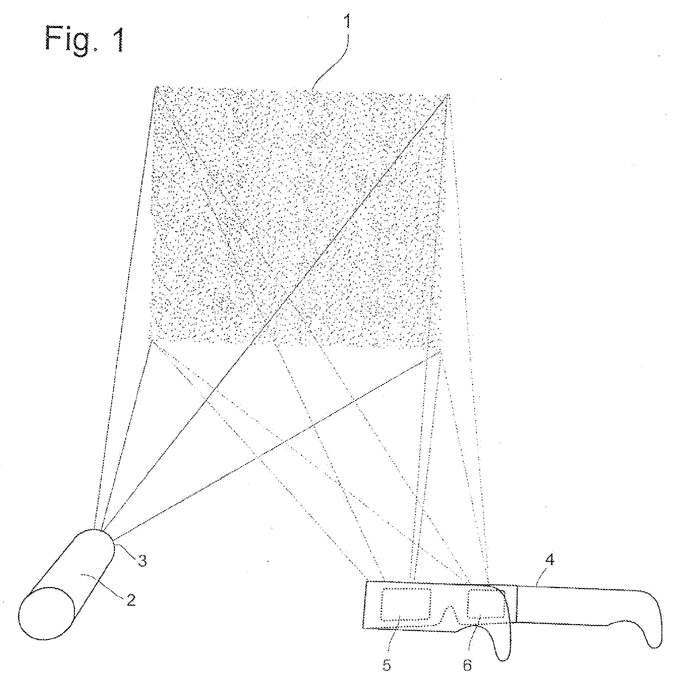

In Figur 1 ist eine projizierte Punktwolke 1 dargestellt, die durch eine Projektionseinheit einer auf eine ebene Wand projiziert wird. Die Projektionseinheit besteht aus einer monochromatischen Lichtquelle 2 mit einem davor angeordneten Mittel 3 zur Projektion von punktförmigen Objekten, im vorliegenden Fall ist das Mittel zur Projektion der punktförmigen Objekte eine Anordnung von einem oder mehreren Diffraktiv Optischen Elementen (DOE). Diese DOE sind vor die monochromatische Lichtquelle 2 in den Strahlengang zwischen der monochromatischen Lichtquelle 2 und einer Projektionsfläche angeordnet und sind in Figur 1 nicht konkret abgebildet.

Die oben erwähnte Punktwolke 1 soll nach dem Gedanken der Erfindung mit einer Brille 4 mit diffraktiven Optiken 5 und 6 betrachtet werden. Die diffraktiven Optiken, hier in Form von sogenannten 'Gratings' mit zwei senkrecht aufeinander stehenden optischen Achsen vervielfachen beim Betrachten durch die Brille die projizierte Punktwolke 1, so dass sich dem Betrachter ein vielfach multipliziertes, virtuelles Abbild der ursprünglichen Punktwolke 1 darstellt. Da eine diffraktive Optik den Strahlengang eines monochromatischen Lichtstrahls beugt und nicht wie bei einer Glasoptik mit einer typischen Linsendispersion bricht, treffen sich beim Blick durch die hier beschriebene Betrachtungsbrille unterschiedliche Lichtstrahlen unterschiedlicher Lichtpunkte der projizierten Punktwolke mit einem unterschiedlichen Winkel auf den Sehapparat. Dadurch ergibt sich ein scheinbar im Raum liegender Punkt. Dadurch dass jeder einzelne Lichtstrahl beim Betrachten das Beugungsgitter, das 'Grating', passieren muss, wird jeder individuelle Lichtpunkt nicht nur in seiner Position verändert, sondern vervielfacht. Die Vervielfachung hängt von der Liniendichte des jeweiligen Beugungsgitters als diffraktive Optik 5, 6 im jeweiligen Augenglas der Brille 4 ab. Bei einem zweidimensionalen Beugungsgitter mit zwei senkrecht aufeinander stehenden Achsen wird jeder einzelne Lichtpunkt neben seiner 0. (nullten) Ordnung auch noch 8-fach als erste Ordnung und 16-fach als zweite Ordnung sichtbar sein, und bei guter Ausleuchtung eines mitteldichten Beugungsgitters von ca. 500 Linien/mm noch 24-fach in dritter Ordnung sichtbar sein. Dabei überlagern sich einzelne Lichtpunkte am äußersten rechten Rand des Gesichtsfeldes eines Betrachters mit Bildern erster, zweiter und dritter Ordnung, erzeugt aus Lichtpunkten am linken Rand des Gesichtsfeldes des Betrachters, der durch die Brille 4 die Punktwolke 1 ansieht. Die Mehrfachüberlagerung hat den Effekt, dass an jeder Stelle des Gesichtsfeldes des Betrachters bei Rotation des Blickes Lichtpunkte in verschiedene Richtungen zu laufen scheinen. Dabei nimmt jeder Lichtpunkt einen Weg, der im Raum zu schweben scheint. Beim Blick durch die Brille sind die Lichtpunkte der Punktwolke 1 so sehr vervielfacht, dass ein Betrachter die Szene nicht mehr überblicken kann. Es stellt sich unwillkürlich der Eindruck ein, die Lichtpunkte seien im Raum gleichmäßig um den Betrachter herum angeordnet.

In Figur 2 ist das Abbild eines einzelnen, monochromatischen Lichtpunktes dargestellt, der durch die diffraktiven Optiken 5 und 6 der Brille 4 vervielfacht ist. Der Lichtpunkt 10 in der Mitte stellt die 0. (nullte) Ordnung dar, und wird von acht schwächer leuchtenden Lichtpunkten 11 der ersten Ordnung umrandet. Diese Lichtpunkte 11 der 1. Ordnung werden wiederum von 16 noch schwächer leuchtenden Lichtpunkten 12 umrandet, so dass ein einzelner Lichtpunkt in eine Vielzahl von Lichtpunkten 11 und 12 aufgelöst wird. Sofern zwei ähnliche diffraktive Optiken für jedes Augenglas einer Brille 4 eingesetzt werden, erscheint jeder einzelne Lichtpunkt beim Blick durch die Brille 4 im Raum zu schweben.

In Figur 3 ist dargestellt, wie sich eine Punktwolke 1, hier als durchgezogene Linie 20 skizziert, in mehrere, einander überlappende Abbilder 21, 22 der Punktwolke aufteilt. Hierdurch überlappen sich die einzelnen Lichtpunkte der ursprünglichen Abbildung 20 und der Abbilder 21 der 1. Ordnung und die Abbilder 22 der 2. Ordnung so stark, dass das Ursprungsbild, Punktwolke 1, nicht mehr erkennbar ist.

Im Ergebnis stellt sich beim Betrachter, der durch die Brille 4 die monochromatische Lichtpunktwolke 20 betrachtet, ein bemerkenswertes Schauspiel von im Raum verteilten Lichtpunkten ein.

### BEZUGSZEICHENLISTE

- 1: Punktwolke
- 2: Lichtquelle
- 3: Mittel zur Projektion
- 4: Brille
- 5: diffraktive Optik
- 6: diffraktive Optik

- 10: Lichtpunkt
- 11: Lichtpunkt
- 12: Lichtpunkt
- 20: Punktwolke
- 21: Punktwolke
- 22: Punktwolke

## Patentansprüche

1. Set zum Betrachten von dreidimensionalen Punktwolken (1), aufweisend:
- mindestens eine monochromatische Lichtquelle (2),
- mindestens ein Mittel (3) zur Projektion von punktförmigen Objekten
- mindestens eine Betrachtungsbrille (4) mit mindestens je einem zweidimensionalen Diffraktionsgitter (5, 6) pro Augenglas.

2. Set nach Anspruch 1,
**dadurch gekennzeichnet, dass**
die Liniendichte des mindestens einen Diffraktionsgitters (5, 6) von 500 Linien/cm bis 10.000 Linien/cm beträgt, bevorzugt bei ca. 4000 Linien/mm bis 6000 Linien/cm beträgt.

3. Set nach einem der Ansprüche 1 bis 2
**dadurch gekennzeichnet, dass**
die mindestens eine monochromatische Lichtquelle (2) ein Halbleiterlaser ist, wobei jede monochromatische Lichtquelle eine individuelle Wellenlänge aufweist.

4. Set nach einem der Ansprüche 1 bis 3,
**dadurch gekennzeichnet, dass**
das mindestens eine Mittel zur Abbildung von punktförmigen Objekten ausgewählt ist aus der Gruppe bestehend aus:
a) eine Kombination aus einer Aufweitungslinse und einer Punktblende, wobei die Punktblende mindestens ein Loch, bevorzugt viele Löcher aufweist,
b) eine diffraktive Optik, wobei die diffraktive Optik optional aus einer Kombination von mindestens zwei diffraktiven Elementen besteht, die voreinander angeordnet sind,
c) eine diffraktive Optik mit zwei übereinander projizierten Diffraktionsmustern,
d) eine holografisch-diffraktive Optik, wobei die holografisch-diffraktive Optik wahlweise kombiniert ist mit mindestens einer regelmäßigen diffraktiven Optik und/oder mindestens einer weiteren holografischen diffraktiven Optik,
e) ein mehrschichtiges diffraktiv optisches Element (DOE), wobei das DOE innerhalb eines transparenten Materialblockes mehre Ebenen mit diffraktiven oder holografisch-diffraktiven Mustern aufweist.

5. Set nach einem der Ansprüche 1 bis 4,
**dadurch gekennzeichnet, dass**
die Achse verschiedener Diffraktionsgitter einander unter einem Winkel schneiden.

6. Verwendung eines Diffraktionsgitters als Augenglas für eine Brille zur Betrachtung von dreidimensionalen Punktwolken.

7. Verfahren zur Erzeugung von virtuellen und dreidimensionalen Punktwolken, aufweisend die folgenden Schritte:
- Erzeugen einer Punkteschar monochromatischer Lichtpunkte auf einer Projektionsfjäche,
- Bereitstellen von Betrachtungsbrillen mit mindestens einem Diffraktionsgitter pro Augenglas.

8. Verfahren nach Anspruch 7,
**gekennzeichnet durch** den Einsatz verschiedener monochromatischer Lichtpunkte mit unterschiedlichen Wellenlängen.
